Europäisches Patentamt

European Patent Office

Office européen des brevets

(11) Veröffentlichungsnummer: **0 073 198**
**B1**

(12) **EUROPÄISCHE PATENTSCHRIFT**

(45) Veröffentlichungstag der Patentschrift:
18.09.85

(51) Int. Cl.⁴: **B 60 T   8/88// G01P3/481**

(21) Anmeldenummer: 81903114.7

(22) Anmeldetag: 04.11.81

(86) Internationale Anmeldenummer:
PCT/DE 81/00187

(87) Internationale Veröffentlichungsnummer:
WO/8202862 (02.09.82 Gazette 82/21)

(54) ANTIBLOCKIERREGELSYSTEM.

(30) Priorität: 26.02.81 DE 3107115

(43) Veröffentlichungstag der Anmeldung:
09.03.83 Patentblatt 83/10

(45) Bekanntmachung des Hinweises auf die Patenterteilung: 18.09.85 Patentblatt 85/38

(84) Benannte Vertragsstaaten:
DE FR GB

(56) Entgegenhaltungen:
GB-A- 2 003 610
US-A- 3 935 538
US-A- 4 039 227

(73) Patentinhaber: ROBERT BOSCH GMBH
Postfach 50
D-7000 Stuttgart 1 (DE)

(72) Erfinder: BRASCHEL, Volker
Goethestrasse 1
D-7100 Heilbronn (DE)
Erfinder: EMIG, Reiner
Gnesener Strasse 46
D-7000 Suttgart (DE)
Erfinder: GERSTENMEIER, Jürgen
Gaibergerstrasse 22
D-6903 Neckargmünd (DE)
Erfinder: LEIBER, Heinz
Theodor-Heuss-Strasse 34
D-7141 Oberriexingen (DE)
Erfinder: MENDEL, Michael
Landhausstrasse 1
D-6900 Heidelberg (DE)

(74) Vertreter: Witte, Alexander, Dr.-Ing. et al
c/o Robert Bosch GmbH Robert-Bosch-Platz 1
D-7016 Gerlingen-Schillerhöhe (DE)

POOR QUALITY

## Beschreibung

### Stand der Technik

Die Erfindung betrifft ein Antiblockierregelsystem mit den Merkmalen des Oberbegriffs des Anspruchs 1.

Ein derartiges Antiblockierregelsystem ist z. B. aus der US-A-4 039 227 bekannt. Bei den bekannten Antiblockierregelsystemen werden zur Unterdrückung der Störsignale, die durch Reibschwingungen erzeugt werden, Frequenzfilter eingesetzt. Solche Reibschwingungen treten insbesondere bei Nutzkraftwagen bei geringer Geschwindigkeit (kurz vor Stillstand) auf. Sie liegen mit ihrer Frequenz bei einigen hundert Herz. Die Meßwertgeber des Antiblockierreglers erfassen diese Schwingungen und übertragen sie als Störsignale in den Regler. Damit wird eine zu hohe Radgeschwindigkeit vorgetäuscht, was zu einem Fehlverhalten des Reglers führt.

Die bekannten Lösungsvorschläge haben den Nachteil, daß sie keine Digitalisierung zumindest in diesem Bereich des Reglers zulassen und damit die Integration (IC, μP) erschweren.

### Vorteile der Erfindung

Der Erfindung liegt die Aufgabe zugrunde, eine Lösung für die Unterdrückung dieser Störsignale zu finden, die eine Digitalisierung der Schalteinrichtung zuläßt.

Diese Aufgabe wird durch die in Anspruch 1 angegebenen Merkmale gelöst.

Als zusätzlicher Vorteil ergibt sich bei der Erfindung, daß diese Störbeseitigung mit einer Selbsttesteinrichtung wesentlich leichter zu überprüfen ist als die Lösungen, die analoge Filter benutzen.

Die Erfindung geht davon aus, daß bei dem Auftreten von Reibschwingungen ein Radverhalten vorgetäuscht wird, das physikalisch unmöglich ist. So kommt es dabei zu extrem hohen Änderungen der Radgeschwindigkeit d. h. zu extremen Radbeschleunigungen. Diese Erscheinung läßt sich zur Störunterdrückung ausnutzen. In den Unteransprüchen sind verschiedene vorteilhafte Ausführungsformen für die Störunterdrückung aufgelistet, auf die noch im Zusammenhang mit den Ausführungsbeispielen der Erfindung eingegangen wird.

### Zeichnung

Die Zeichnungen zeigen in Figur 1 den Prinzipaufbau eines Ausführungsbeispieles eines Antiblockierregelsystems ; Figur 2 ein Prinzipschaltbild der erfindungsgemäßen Störunterdrückung ; Figur 3 ein Ausführungsbeispiel und Figur 4 ein Diagramm zur Erklärung der Funktionsweise.

### Beschreibung der Ausführungsbeispiele

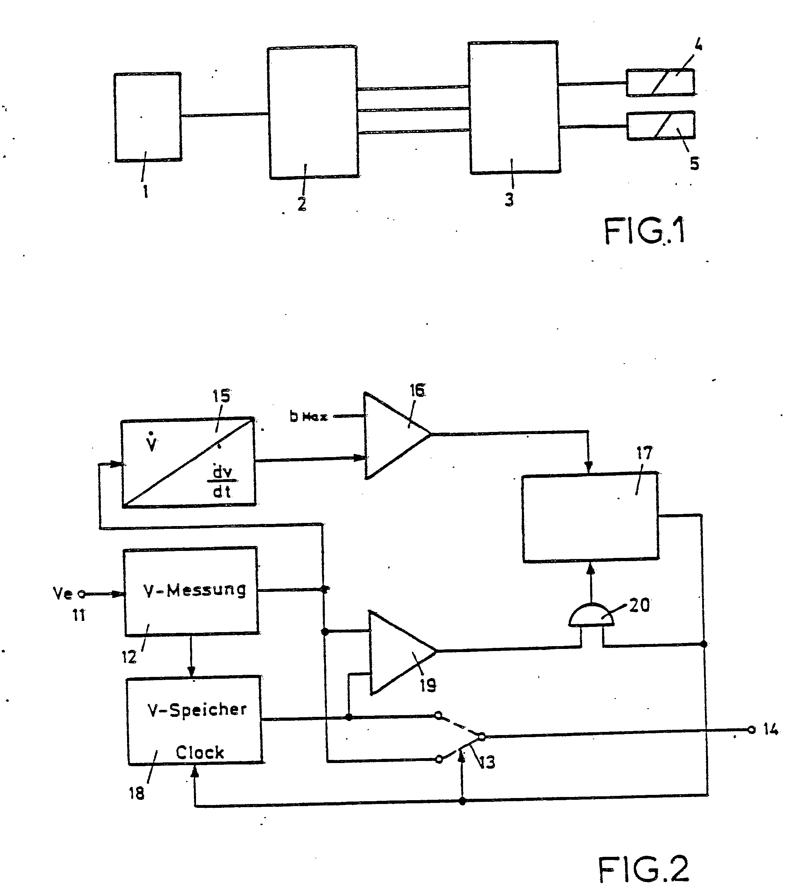

In Figur 1 ist mit 1 ein Meßwertgeber zur Erfassung der Radgeschwindigkeit bezeichnet. Im Block 2 werden die Signale des Meßwertgebers 1 aufbereitet und dann einer Auswerteschaltung 3 zugeführt, in denen aus den Signalen der Signalaufbereitung, z. B. Verzögerungssignal, Beschleunigungssignal, Schlupfsignal Ansteuersignale für Magnetventile 4 und 5 gewonnen werden, mit denen der Druck abgesenkt und konstant gehalten wird.

Um die durch Reibschwingungen an den Rädern auftretenden Störungen zu beseitigen, kann man in der Signalaufbereitung 2 der Figur 1 die Schaltung der Figur 2 vorsehen.

Hier werden an der Klemme 11 die vom Meßwertgeber 1 kommenden Impulse eingekoppelt und in einem Block 12 wird hieraus ein Radgeschwindigkeitssignal gebildet. Dieses gelangt normalerweise (ohne Störung) über einen Schalter 13 zu einer Klemme 14, an die sich weitere Glieder zur Signalaufbereitung anschließen. Das Ausgangssignal des Blocks 12 gelangt aber auch zu einem Differenzierer 15 und dessen Ausgangssignal zu einem Vergleichsglied 16, das ein Signal abgibt, wenn eine vorgegebene Beschleunigungsschwelle amax überschritten ist. amax ist so gewählt, daß es bei normalem Betrieb (Radbeschleunigung) nie überschritten werden kann, also ein Überschreiten physikalisch unmöglich ist.

Das Ausgangssignal des Vergleichsgliedes 16 setzt einen Fehlerspeicher 17, dessen dann erzeugtes Ausgangssignal einmal den Schalter 13 umschaltet, so daß dann die Klemme 14 mit dem Ausgang eines Speichergliedes 18 verbunden ist, und zum anderen den gespeicherten Wert im Speicherglied 18 festhält.

Diesem Speicherglied 18 wird fortlaufend, aber etwas verzögert der im Block 12 ermittelte Radgeschwindigkeitswert zugeführt und dieser wird bis zum Auftreten des nächstfolgenden Geschwindigkeitswertes gespeichert, solange der Fehlerspeicher 17 nicht gesetzt ist. Sobald der Fehlerspeicher gesetzt ist, wird der zuletzt eingespeicherte Geschwindigkeitswert festgehalten und nunmehr als zu verwendender Geschwindigkeitshilfswert an die Klemme 14 geliefert. Wegen der etwas verzögerten Einspeicherung ist dann noch der Geschwindigkeitswert vor dem Auftreten der Störung im Speicher 18 vorhanden.

Erreicht der Ausgangswert des Blocks 12 wieder den gespeicherten oder einen kleineren Wert, was erst nach Verschwinden der Störung möglich is, so wird von einem Komparator 19 über ein Gatter 20 der Fehlerspeicher 17 zurückgesetzt und damit wieder auf Normalbetrieb geschaltet. Während der Störung dient der im Speicher 18 gespeicherte Wert als Geschwindigkeitshilfswert. Der Differenzierer 15 kann auch zur Gewinnung von Verzögerungs- und/oder Beschleunigungssignalen für die eigentliche Regelung dienen.

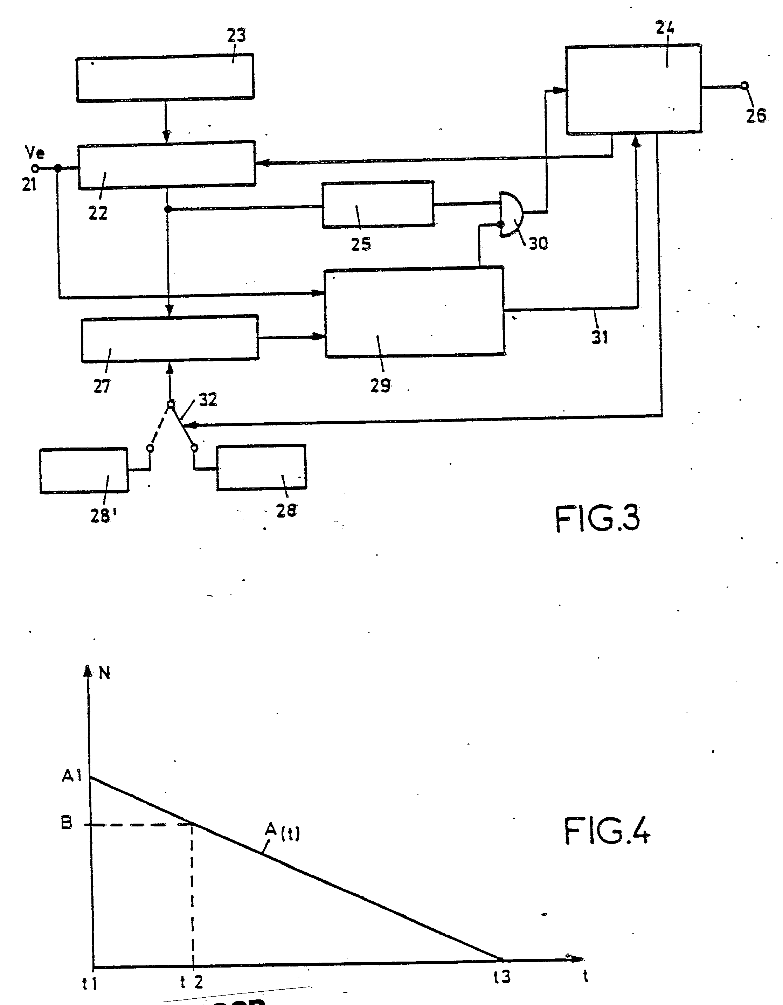

Ein Ausführungsbeispiel wird anhand der Figuren 3 und 4 näher erläutert. Dort werden die Impulse des Meßwertgebers 1 der Figur 1 der Klemme 21 zugeführt. Sie bewirken, daß ein Zähler 22 auf einen vorgegebenen Vorladewert A1 gesetzt wird, der über einen Block 23 eingestellt ist. Dem Zähler 22 werden auch Rückzählimpulse aus einem Integrator mit nachgeschaltetem Zahlen-Frequenzwandler 24 zugeführt, deren Frequenz der jeweils vorher gemessenen Radgeschwindigkeit proportional ist. Der Vorladewert und die Frequenz der Rückzählimpulse sind so aufeinander abgestimmt, daß wenn die Radgeschwindigkeit sich nicht ändert, der Zähler 22 auf 0 gebracht ist, wenn ein neuer Impuls an Klemme 21 erscheint. Ändert sich dagegen die Geschwindigkeit von Messung zu Messung, so steht bei Auftreten des nächsten Impulses an Klemme 21 ein positiver oder negativer Rest im Zähler 22. Dieser wird vom Korrekturglied 25 z. B. einem Korrekturzähler ermittelt und zur Korrektur des Radgeschwindigkeitswertes zum Integrator 24 übertragen. An der Ausgangsklemme 26 steht jeweils der Radgeschwindigkeitswert zur weiteren Verarbeitung zur Verfügung.

An den Zähler 22 ist ein Vergleichsglied 27 angeschlossen, in dem der Augenblickswert A(t) des Zählers 22 jeweils mit einem vorgegebenen Vergleichsgrenzwert B, der im Block 28 vorgeben ist, verglichen wird. Der Vergleicher 27 gibt ein Signal ab, solange A(t) größer B ist. Der Verlauf von A(t) über der Zeit t ergibt sich aus Figur 4 dgl. der gewählte Wert B. Ein Signal aus dem Vergleicher wird somit immer dann gegeben, wenn die Periodendauer der aktuellen Messung ≤ der Zeit t2 ist.

Dieses Signal wird einer Gatterschaltung 29 zugeführt, der außerdem noch die Impulse des Meßwertgebers (Klemme 21) zugeführt werden. Diese Gatterschaltung gibt ein Sperrsignal auf ein Gatter 30, wenn innerhalb der Periode t1 bis t2 ein nächster Impuls an der Klemme 21 erscheint, was — wegen der entsprechenden Wahl des Vergleichswertes B — bedeutet, daß eine physikalisch unmögliche Änderung der Radgeschwindigkeit durch die Signale vorgetäuscht wird. Durch die Sperrung des Gatters 30 wird dann eine weitere — und falsche — Korrektur des Radgeschwindigkeitswertes verhindert. In dieser Ausführungsform genügt es, das Korrekturglied etwas verzögert die Korrektur vornehmen zu lassen, so daß die Sperrung vor der (falschen) Korrektur wirksam ist.

Wenn man die Korrektur jedoch erst nach der Feststellung, daß eine bestimmte Anzahl von Impulsen an Klemme 21 zu früh kamen, verhindern will, muß man einmal den Block 29 als kombinierte Zähl- und Gatterschaltung ausbilden und zusätzlich über Leitung 31 die durch diese Impulse bewirkte Korrektur rückgängig machen. Dies läßt sich vom Zähler der Zähl- und Gatterschaltung dann bewerkstelligen, wenn pro Impuls an der Klemme 21 jeweils nur um eine bestimmte Größe (digitaler Schritt) korrigiert wurde, da dann über den ̄ ̄ ̄ ̄ ̄ ̄ ̄ ̄ (im Block 29) ein der vorgegenen Zahl von Impulsen entsprechender Abzug im Integrator 24 gemacht werden kann.

Die Figur 3 zeigt noch einen Block 28', über den ein zweiter Vergleichsgrenzwert 13 vorgegeben werden kann. Die Umschaltung der Vergleichsgrenzwerte, die eine Änderung der Empfindlichkeit der Schaltung bedeutet, erfolgt vom Integrator 24 über Schalter 32 und zwar in Abhängigkeit von der augenblicklichen Radgeschwindigkeit.

**Patentansprüche**

1. Antiblockierregelsystem für Fahrzeuge bestehend aus wenigstens einem Meßwertgeber zur Gewinnung eines Radgeschwindigkeitssignals, einer Auswerteschaltung, der das Signal des wenigstens einem Meßwertgebers zugeführt wird, die diese verarbeitet und die daraus Steuersignale erzeugt und Einrichtungen zur Variation des Bremsdruckes, denen diese Steuersignale zugeführt werden, wobei das Antiblockierregelsystem eine Schalteinrichtung enthält, um die durch Reibschwingungen der Räder auftretenden Störsignale unwirksam zu machen, dadurch gekennzeichnet, daß diese Schalteinrichtung eine einen Vergleicher (16, 27) aufweisende Erkennungsschaltung (15, 17; 22, 23, 27, 29) enthält, um durch Vergleich physikalisch unmögliche Änderungen der Radgeschwindigkeit zu erkennen, daß eine von dieser Erkennungsschaltung angesteuerte, eine Speichereinheit (18) für die Fahrzeuggeschwindigkeit aufweisende Hilfseinrichtung (13, 18; 24, 30) vorgesehn ist; daß die Speichereinheit (18) zur jeweiligen Speicherung eines gemessenen Geschwindigkeitswerts dient, daß die Speichereinheit (18) mit der Erkennungsschaltung (15 bis 17) verbunden ist, um eine Änderung des gespeicherten Geschwindigkeitswerts durch den nachfolgenden Geschwindigkeitswert zu verhindern, wenn er durch ein Störsignal eine physikalisch unmögliche Änderung gegenüber dem gespeicherten Wert aufweist, und daß in der nach Erkennung eines Störsignals folgenden Meßperiode das gespeicherte Geschwindigkeitssignal der letzten störungsfreien Meßperiode verarbeitet wird.

2. Antiblockierregelsystem nach Anspruch 1, dadurch gekennzeichnet, daß die Erkennungsschaltung (15 bis 17) einen Differenzierer (15) für das Radgeschwindigkeitssignal enthält und in dem Vergleicher (16) das Radverzögerungssignal mit einem Vergleichswert amax, der etwa die Grenze der physikalisch möglichen Radbeschleunigung darstellt, verglichen wird und der bei Überschreiten des Vergleichswerts die Hilfseinrichtung ansteuert.

3. Antiblockierregelsystem nach Anspruch 1, dadurch gekennzeichnet, daß der Vergleicher die vorher ermittelte Radgeschwindigkeit mit der augenblicklich ermittelten Radgeschwindigkeit vergleicht und die Erkennungsschaltung eine Schwellwertschaltung enthält, die bei Überschreiten einer vorgegebenen, physikalisch unmöglichen Schwelle der Radgeschwindigkeitsänderung die Hilfseinrichtung ansteuert.

4. Antiblockierregelsystem nach einem der Ansprüche 1 bis 3, dadurch gekennzeichnet, daß die Hilfseinrichtung (15 bis 17) einen Fehlerspeicher (17) enthält, der von der Erkennungsschaltung (15 bis 17) bei Auftreten der physikalisch unmöglichen Änderung gesetzt und bei deren Verschwinden rückgesetzt wird und dessen Ausgangssignal die Bildung des Radgeschwindigkeitssignals steuert (über 13 und 18).

5. Antiblockierregelsystem nach einem der Ansprüche 1 bis 4, dadurch gekennzeichnet, daß zur Bildung des Radgeschwindigkeitssignals ein Zähler (22) vorgesehen ist, der bei jedem Impuls des Meßwertgebers auf einen vorgegebenen Vorladewert gesetzt wird und dem von einem Integrator (24) Rückzählimpulse mit einer dem vorherigen Geschwindigkeitsmeßwert proportionalen und derart bemessenen Frequenz zugeführt werden, daß bei gleichbleibender Radgeschwindigkeit der Zähler (22) bis zum Auftreten des nächsten Impulses des Meßwertgebers in die 0-Stellung gelangt ist, daß eine Korrektureinrichtung (25) vorgesehen ist, die die Abweichungen A von der 0-Stellung jeweils feststellt und eine entsprechende Korrektur des im Integrator (24) vorhandenen Radgeschwindigkeitswert vornimmt und daß der Vergleicher (27) den Stand A des Zählers (22) mit einem physikalisch unmöglichen Vergleichsgrenzwert B (aus 28) vergleicht und ein Signal erzeugt, solange der Stand des Zählers A den Vergleichsgrenzwert B nicht unterschreitet und daß eine Gatterschaltung (29, 30) vorgesehen ist, die bei Auftreten des nächsten Radgeschwindigkeitsimpulses vor Unterschreiten des Vergleichsgrenzwertes B die Korrektureinrichtung (25) unwirksam macht.

6. Antiblockierregelsystem nach Anspruch 5, dadurch gekennzeichnet, daß die Gatterschaltung noch einen Zähler (in 29) umfaßt, um die Korrektureinrichtung (25) erst nach Auftreten einer vorgegebenen Zahl von Vorgängen unwirksam zu machen und der den Geschwindigkeitswert im Integrator (24) entsprechend korrigiert.

7. Antiblockierregelsystem nach Anspruch 2, 3 oder 7, dadurch gekennzeichnet, daß der Vergleichswert B in Abhängigkeit von der Radgeschwindigkeit umschaltbar ist (Schalter 32).

## Claims

1. Antiblocking control system for vehicles, consisting of at least one measurement-value transmitter for obtaining a wheel velocity signal, an evaluating circuit which is supplied with the signal of at least one measurement-value transmitter and which processes this signal and generates from it control signals, and devices for varying the braking pressure which are supplied with these control signals, the antiblocking control system containing a switching device to render ineffective the interference signals occurring as a result of frictional vibrations of the wheels, characterised in that this switching device contains a detection circuit (15, 17 ; 22, 23, 27, 29) provided with a comparator (16, 27) in order the detect, by comparison, physically impossible changes in the wheel velocity, that an auxiliary device (13, 18 ; 24, 30) is provided which is provided with a memory unit (18) for the vehicule velocity and which is activated by this detection circuit, that the memory unit (18) is used for the respective storage of a measured velocity value, that the memory unit (18) is connected to the detection circuit (15 to 17) in order to prevent the stored velocity value from being changed by the subsequent velocity value if the latter, as a result of an interference signal, displays a physically impossible change compared with the stored value, and that in the measuring period following after detection of an interference signal, the stored velocity signal from the last interference-free measuring period is processed.

2. Antiblocking control system according to Claim 1, characterised in that the detection circuit (15 to 17) contains a differentiator (15) for the wheel velocity signal and that in the comparator (16) the wheel delay signal is compared with a reference value amax which approximately represents the limit of the physically possible wheel acceleration and which activates the auxiliary device if the reference value is exceeded.

3. Antiblocking control system according to Claim 1, characterised in that the comparator compares the previously found wheel velocity with the instantaneously found wheel velocity and the detection circuit contains a threshold circuit which activates the auxiliary device if a predetermined physically impossible threshold of the wheel velocity change is exceeded.

4. Antiblocking control system according to one of Claims 1 to 3, characterised in that the auxiliary device (15 to 17) contains an error memory (17) which is set by the detection circuit (15 to 17) when a physically impossible change occurs and which is reset when this change disappears and the output signal of which controls the formation of the wheel velocity signal (via 13 and 18).

5. Antiblocking control system according to one of Claims 1 to 4, characterised in that, for forming the wheel velocity signal, a counter (22) is provided which is set to a predetermined preload value with each pulse from the measurement-value transmitter and which is supplied by an integrator (24) with decrementing pulses having a frequency which is proportional to the previous velocity measurement value and is dimensioned in such a way that, if the wheel velocity remains the same, the counter (22) has reached its zero position before the next pulse from the measurement-value transmitter has occured, that a correction device (25) is provided which in each case detects the deviations A from the zero position and undertakes a corresponding correction of the wheel velocity value existing in the integrator (24) and that the comparator (27) compares the count A of the counter (22) with a physically impossible reference limit value B (from 28) and generates a signal for as long as the count of the counter A does not drop below the reference limit value B and that a gate circuit (29, 30) is provided which disables the correction device (25) if the next wheel velocity pulse occurs before the count drops below the reference limit value B.

6. Antiblocking control system according to Claim 5, characterised in that the gate circuit comprises another counter (in 29) in order to disable the correction device (25) only after a predetermined number of events has occurred and which correspondingly corrects the velocity value in the integrator (24).

7. Antiblocking control system according to Claim 2, 3 or 7, characterised in that the reference value B can be switched over in dependence on the wheel velocity (switch 32).

**Revendications**

1. Dispositif antiblocage pour véhicules, comprenant au moins un capteur de valeur de mesure pour fournir un signal de vitesse de roue, un circuit d'exploitation qui reçoit le signal d'au moins un capteur de valeur de mesure, pour traiter ces signaux et en former des signaux de commande, et des installations pour changer la pression de freinage qui reçoivent ces signaux de commande, le dispositif antiblocage comportant une installation de commande pour rendre inefficaces les signaux parasites engendrés par les oscillations de frottement des roues, caractérisé en ce que cette installation comprend un circuit de reconnaissance (15, 17 ; 22, 23, 27, 29) ayant un comparateur (16, 27) pour reconnaître des variations physiquement impossibles de la vitesse de rotation de roue par comparaison, en ce qu'il est prévu une installation auxiliaire (13, 18 ; 24, 30) commandée par ce circuit de reconnaissance, et ayant une unité de mémoire (18) pour la vitesse du véhicule, en ce que l'unité de mémoire (18) sert à la mise en mémoire respective d'une valeur de vitesse mesurée, en ce que l'unité de mémoire (18) est reliée au circuit de reconnaissance (15-17) pour éviter un remplacement de la valeur de vitesse mise en mémoire par la valeur de vitesse suivante s'il y a une variation physiquement impossible par rapport à la valeur mise en mémoire, et en ce que pendant la période de mesure suivant la reconnaissance d'un signal parasite, on traite le signal de vitesse mis en mémoire correspondant à la dernière période de mesure sans parasite.

2. Dispositif antiblocage selon la revendication 1, caractérisé en ce que le circuit de reconnaissance (15-17) comporte un différentiateur (15) pour le signal de vitesse de roue et le signal de décélération de roue est comparé dans le comparateur (16) à la valeur de comparaison (amax) qui correspond sensiblement à la limite de l'accélération de roue physiquement possible, et commande l'installation auxiliaire lors du dépassement de cette valeur de comparaison.

3. Dispositif antiblocage selon la revendication 1, caractérisé en ce que le comparateur compare la vitesse de roue déterminée précédemment à la vitesse de roue déterminée à l'instant et le circuit de reconnaissance comporte un circuit à seuil qui, lors du dépassement d'un seuil prédéterminé, physiquement impossible pour la variation de vitesse de la roue, commande l'installation auxiliaire.

4. Dispositif antiblocage selon l'une des revendications 1 à 3, caractérisé en ce que l'installation auxiliaire (15 à 17) comporte une mémoire d'erreur (17) qui est mise à l'état par le circuit de reconnaissance (15-17) lors de l'apparition d'une variation physiquement impossible et qui est remise à l'état initial lors de la disparition de cette variation, et dont le signal de sortie commande la formation du signal de vitesse de roue (par 13 et 18).

5. Dispositif antiblocage selon l'une des revendications 1 à 4, caractérisé en ce que pour former le signal de vitesse de roue, il est prévu un compteur (22) qui, à chaque impulsion du capteur de valeur de mesure, est mis à un état de précharge, prédéterminé, et qui reçoit les impulsions de décomptage d'un intégrateur (24) à une fréquence proportionnelle à la valeur de la vitesse précédente et dimensionnée ainsi, en ce que la vitesse de roue restant constante, le compteur (22) passe en position zéro jusqu'à l'arrivée de l'impulsion suivante du capteur de valeur de mesure, en ce qu'il est prévu une installation de correction (25) qui détermine les déviations (A) par rapport à la position (0) et effectue une correction correspondante de la valeur de vitesse de roue se trouvant dans l'intégrateur (24) et en ce que le comparateur (27) compare l'état (A) du compteur (22) à une valeur de comparaison (B) (provenant de 28) physiquement impossible, et génère un signal aussi longtemps que l'état du compteur (A) ne passe pas en dessous de la valeur limite de comparaison (B) et en ce qu'il est prévu un circuit de porte (29, 30) qui, lors de l'arrivée de l'impulsion de vitesse de roue suivante, rend inopérante l'installation de correction (25) avant le dépassement vers le bas de la valeur limite de comparaison (B).

6. Dispositif antiblocage selon la revendication 5, caractérisé en ce que le circuit de porte comporte également un compteur (dans 29) pour rendre inopérante l'installation de correction (25) qu'après un nombre prédéterminé d'opérations et qui corrige de façon correspondante la valeur de la vitesse dans l'intégrateur (24).

7. Dispositif antiblocage selon les revendications 2, 3 ou 4, caractérisé en ce que la valeur de comparaison (B) peut être commutée en fonction de la vitesse de roue (commutateur 32).

FIG.1

FIG.2

1

FIG.3

FIG.4

POOR
QUALITY

2